**Europäisches Patentamt**

(19) **European Patent Office**

**Office européen des brevets**

(11) Publication number: **0 217 849**
**B1**

(12) # EUROPEAN PATENT SPECIFICATION

(45) Date of publication of the patent specification:
21.03.90

(21) Application number: 86901987.7

(22) Date of filing: 19.03.86

(86) International application number:
PCT/HU 86/00017

(87) International publication number:
WO 86/05361 (25.09.86 Gazette 86/21)

(51) Int. Cl.⁵: **A 23 J 1/06, A 23 K 1/04,
A 61 K 35/14, A 61 K 35/16,
A 61 K 35/18**

(54) DECOLOURIZED PREPARATIONS CONTAINING FORMED ELEMENTS OF BLOOD, PROCESS FOR THEIR PREPARATION AS WELL AS FOOD- AND FEED-ADDITIVES CONTAINING THE SAME AND PROCESSES FOR PREPARATION OF THE LATTER.

(30) Priority: 20.03.85 HU 102285

(43) Date of publication of application:
15.04.87 Bulletin 87/16

(45) Publication of the grant of the patent:
21.03.90 Bulletin 90/12

(84) Designated Contracting States:
CH DE FR GB LI NL

(56) References cited:
CH-A-622 683
DD-A-127 755
DE-A-1 920 423
US-A-4 180 592

(73) Proprietor: HARMATH, Sandor
Tavirozsa u. 9
H-1161 Budapest (HU)
Proprietor: ALMASI, László
Balzac u. 54
H-1136 Budapest (HU)
Proprietor: FAZEKAS, Arpád
Disz tér 3.
H-1014 Budapest (HU)
Proprietor: SOMFAI, Eva, Dr.
Táncsics u. 8
H-1014 Budapest (HU)
Proprietor: HUTAS, István, Dr.
15, Erdökerülö u.
H-1157 Budapest (HU)

(72) Inventor: HARMATH, Sandor
Tavirozsa u. 9
H-1161 Budapest (HU)
Inventor: ALMASI, László
Balzac u. 54
H-1136 Budapest (HU)
Inventor: FAZEKAS, Arpád
Disz tér 3.
H-1014 Budapest (HU)
Inventor: SOMFAI, Eva, Dr.
Táncsics u. 8
H-1014 Budapest (HU)
Inventor: HUTAS, István, Dr.
15, Erdökerülö u.
H-1157 Budapest (HU)

(74) Representative: Lehn, Werner, Dipl.-Ing.
Hoffmann, Eitle & Partner Patentanwälte
Arabellastrasse 4, D-8000 München 81 (DE)

## Description

This invention relates to a process for the preparation of decolourized products containing formed elements of blood, such as full blood powder, hemoglobin powder and blood concentrates, which serve for the preparation of food additives from solutions, suspensions or emulsions containing such formed elements of blood, by adding anticoagulants, opening the formed elements of blood containing hemoglobin by methods known per se, and if desired concentrating the compositions thus obtained and/or freeze drying the same.

It is known that the biological value of blood is extremely high because of its content of proteins, lipids, iron, A and B vitamins as well as that of aminoacids in optimal combination.

However, its red colour and unfavourable taste and odour is a considerable drawback of the application of blood in big quantities as a direct and complete nutrient product.

Several methods were published to eliminate these unfavourable properties.

In order to camouflage the colour, blood emulgates were prepared by adding proteins or milk to the blood. This did, however, not lead to good results in view of the remaining colour, and the fact that further added material was undesirable with respect to quality. It was suggested to decolourize hemoglobin with hydrogen peroxide and to eliminate the heme fraction e.g. with hydrochloric acid in acetone. The treatment with peroxides, however, leads to side products (cystinic acid or methionine-sulphonic acid). The treatment with acid leads to the formation of globin, which results in a change of the biological or physical properties (e.g. solubility).

With other processes it was only possible to obtain a colourless product when the proteins were considerably destroyed; e.g. at a pH value of 4.5 the intensive red colour diminished, but 85 % of the proteins were destroyed.

A treatment with enzymes, such as alkalase or specific proteases resulted in products of rather bitter taste.

Other known processes include acid hydrolysis of the blood at 115 to 120°C and steam distillation of undesirable products. However, these methods also destroy the valuable proteins.

CH-A-622 683, US-A-4 180 592 and DD-A-127 755 disclose such methods for the preparation of decoloured blood concentrates or blood derivatives.

It is the object of the present invention to overcome the above-mentioned drawbacks and to provide a method to obtain an improved decolourized product containing formed elements of blood which is in all aspects favourable as a food additive to human or animal food.

The above object is solved by a process as outlined above, which is further characterized by adjusting the pH value of the mixture containing the open formed elements and the hemoglobin to a pH of 1 to 2, treating the mixture with hydrogen peroxide in the presence of a carbohydrate derivative containing a dienol group, if desired dialyzing the solution thus obtained to eliminate the by-products, concentrating the solution until a dry substance content of 10 to 40 % w/v is obtained before or after adjusting the pH value to 7 to 7.5, and – if desired – freeze drying the product.

After this the product can be admixed with blood plasma or a plasma concentrate and/or it can be freeze dried in vacuo and/or the product thus obtained can be used as an additive of human or animal food. Before the last step water and or further additives can be applied.

The opening of formed elements of blood can be carried out by using techniques known per se. Thus it is possible to use a flow system of 50 bis 200 bar (50 to 200 atm.) pressure in a pressure or a slot homogenizer.

It is also possible to use ultrasonic methods or freezing and dissolving methods or osmotic methods.

The basis of the present invention is the recognition that oxidation, when carried out in the presence of carbohydrates containing a dienol group (e.g. ascorbic acids) at a pH of 1 to 3 does not lead to a denaturation of the proteins. The reactions leading to by-products are restricted; there is no foam in the reaction mixture but a special retarded reaction mixture is obtained in which the decolourizing reaction takes place within 2 to 3 hours under very mild conditions. The aminoacids do not oxidize and thus cystine and methionine do not transform to cystinic acid or methionine-sulphonic acid, respectively.

Thus the invention has succeeded in finding a very smooth method to split the hemoglobin of the blood.

According to the invention the oxidation is accomplished with hydrogen peroxide. It is preferable to add ascorbic acid in amount of 0.5 to 5 % weight/volume of the hemoglobin solution, and 1 to 5 % w/v hydrogen peroxide in a 20 to 30 w.-% aqueous solution. 1 to 3 % w/v and 2 to 4 % w/v are preferred ranges.

The carbohydrate derivative containing dienol groups should be added preferably before addition of the oxidizing agent. The two reagents may, however, also be added simultaneously.

As a carbohydrate derivative reducton, reductinic acid, hydroxy-tetronic acid or preferably ascorbic acid can be used.

As a result of oxidation the dark red, non-transparent solution is transformed into a slightly yellowish, clear, transparent solution (colour of plasma) which proves that decolourizing has been effected.

In order to eliminate by-products having an unfavourable odour it is preferable to subject the solution at this stage to dialysis. For this purpose a cut range membrane is used having a molecular weight of 5000 – 50.000, and dialysis is carried out against water or a physiological sodium chloride solution.

The solution thus obtained may be concentrated preferably until a 10 - 40 w-% dry material content is obtained. It is preferable to use an ultra-filter for this purpose.

The colourless solution thus obtained can be used in this form for many purposes as a food additive. However it also can be subjected to further treatment.

Before diminishing the volume it is preferable to adjust the pH value until neutral by addition of an alkaline material, e.g. hydroxides. It might be desirable to prepare a water-soluble powder from the product thus eliminating most of storage and transport problems.

In order to obtain powders as end-products the decolourized hemoglobin solution is adjusted to a neutral pH value, concentrated and freeze-dried in vacuo. For this purpose known freeze-drying equipments can be used.

If the aim is to obtain a more complete blood concentrate or powder, the hemoglobin concentrate is mixed with plasma or a plasma concentrate. When adding an amount of plasma to the concentrate which corresponds to the natural ratio of blood it is possible to obtain a complete blood powder. When diluting this powder later with water a colourless solution is obtained which corresponds from the biological point of view exactly to natural blood.

The hemoglobin concentrate, hemoglobin powder, blood concentrate, or blood powder can be used equally well as an additive or complementary of human or animal food. Its taste odour and colour do not infavourably influence the original properties and flavour of the food.

Thus it is excellent for human consumption e.g. in meat products, conserved food, baby food. Its emulgating effect is extremely good. If necessary the product can be readily granulated.

The combination of aminoacids in the colourless blood powder corresponds to the combination in the blood used as starting material.

Further details of the process are to be found in the examples.

**Example 1**

Blood of pigs or cattle is collected in 25 l enameled containers containing 500 ml of an anticoagulant solution (100 g citric acid, 150 g sodium hydrogen carborate in 625 ml of water). After mixing the blood with the anticoagulant the containers are closed and transferred to the place of further operation.

The blood is passed through a blood separator whereby the plasma is separated from the formed elements.

The formed elements are opened under high pressure or by using a slot homogenizer so that the hemoglobin is liberated and goes into solution.

The hemoglobin solution thus obtained is diluted by addition of water until it contains 5 – 7 % w/v of hemoglobin. The pH value of the solution is then adjusted by addition of aqueous hydrochloric acid (1 : 10) until pH = 2.

The hydrochloric acid is added slowly, stirring constantly. 1 w/v-% ascorbic acid is added to the solution end a hydrogen peroxide solution containing 30 % hydrogen-peroxide is added until the solution contains 2 % of hydrogen peroxide. On stirring 3 – 4 hours at room temperature the "plasma-coloured" reaction mixture is dialyzed on an ultra-filter against water. For ultra-filtration 10,000 molecular weight out range membrane is used.

The hemoglobin solution is concentrated until 15 – 30 % w/v of dry substance content is obtained and the pH value of the solution is adjusted by addition of sodium hydroxide to pH = 7.5.

This product can be used as a food-additive.

**Example 2**

The hemoglobin solution obtained according to Example 1 is mixed with plasma using a ratio to obtain the full blood-plasma : hemoglobin ratio. The mixture is freeze dried to give a dry, yellowish-white product.

Quality of the plasma and hemoglobin powder:

| | |
|---|---|
| Water content | 10 % |
| Protein content | 80 % |
| Solubility | 80 % |

Bacteriological analysis: suitable for human use.

**Claims**

1. A process for the preparation of decolourized products containing formed elements of blood, such as full blood powder, hemoglobin powder and blood concentrates, which serve for the preparation of food additives from solutions, suspensions or emulsions containing such formed elements of blood, by adding anticoagulants, opening the formed elements of blood containing hemoglobin by methods known per se, and if desired concentrating the compositions thus obtained and/or freeze drying the same, characterized by adjusting the pH value of the mixture containing the open formed elements and the hemoglobin to a pH of 1 to 3, treating the mixture with hydrogen peroxide in the presence of a carbohydrate derivative containing a dienol group, if desired dialyzing the solution thus obtained to eliminate the by-products, concentrating the solution until a dry substance content of 10 to 40 % w/v is obtained before or after adjusting the pH value to 7 to 7.5, and – if desired – freeze drying the product.

2. The process according to claim 1, characterized in that after opening the formed elements of blood, the solution obtained is diluted with water until a concentration of 2 to 10 % w/v of hemoglobin is obtained.

3. The process according to any of claims 1 to 2, characterized in that the carbohydrate derivative containing a dienol group is chosen from ascorbic acid, reducton, reductinic acid or hydroxytetronic acid.

4. The process according to claims 1 to 3, characterized by carrying out the oxidation in the presence of 0.5 to 5 % w/v ascorbic acid with 30 w.-% aqueous hydrogen peroxide solution, using a 1 to 5 % w/v hemoglobin solution.

5. The process according to any of claims 1 to 4, characterized by dialyzing the hemoglobin with a cut range membrane of 5, 000 to 50, 000 molecular weight against water or physiological sodium chloride solution.

6. The process according to any of claims 1 to 5, characterized by concentrating the decolourized hemoglobin solution by means of an ultrafilter.

7. The process according to claim 1 to prepare a pale yellow or colourless blood composition, characterized by adding blood plasma or blood plasma concentrate to the decolourized hemoglobin solution, preferably in a ratio corresponding to natural blood.

8. The process according to claims 2, 5, 6 and 7, characterized by freeze drying the decolourized solution to obtain a pale yellow or colourless powder.

9. A process for the preparation of a pale yellow to colourless, clear aqueous solution containing hemoglobin, characterized by subjecting dark red aqueous solutions containing 2 to 10 % by weight hemoglobin at a pH of 1 to 3 in the presence of ascorbic acid to oxidation by hydrogen peroxiole, if desired concentrating the solution thus obtained and adjusting the pH value to 7 to 7.5.

10. The process according to claim 9, characterized in that the decolourized solution is freeze dried to obtain a pale yellow or colourless powder.

11. A process to prepare food compositions for human and animal use, characterized by mixing the products obtained according to any of claims 1 to 8 into human or animal food.

**Patentansprüche**

1. Verfahren zur Herstellung von entfärbten Produkten, die gebildete Blutbestandteile enthalten, wie z. B. Vollblutpulver, Hämoglobinpulver und Blutkonzentrate, die zur Herstellung von Nahrungsmittelzusätzen aus Lösungen, Suspensionen oder Emulsionen dienen, die solche Blutbestandteile enthalten, indem man Antikoagulanzien zufügt, die Blutbestandteile, die Hämoglobin enthalten, durch bekannte Methoden aufschliesst, und gewünschtenfalls die so erhaltene Zusammensetzung aufkonzentriert und/oder dieselbe gefriertrocknet, dadurch *gekennzeichnet*, dass man den pH-Wert der Mischung, die die aufgeschlossenen Bestandteile und das Hämoglobin enthält, auf einen Wert von 1 bis 3 einstellt, die Mischung in Anwesenheit eines Kohlenhydratderivates, das eine Dienolgruppe enthält, mit Wasserstoffperoxid behandelt, gewünschtenfalls die so erhaltene Lösung dialysiert, um die Nebenprodukte zu entfernen, die Lösung aufkonzentriert, bis man einen Trockensubstanzgehalt von 10 bis 40 Gew./Vol.-% erhält, vor oder nach Einstellen des pH-wertes auf 7 bis 7,5, und gewünschtenfalls das Produkt gefriertrocknet.

2. Verfahren nach Anspruch 1, dadurch *gekennzeichnet*, dass man nach dem Aufschliessen der Blutbestandteile die erhaltene Lösung mit Wasser verdünnt, bis man eine Hämoglobinkonzentration von 2 bis 10 Gew./Vol.-% von erhält.

3. Verfahren nach einem der Ansprüche 1 oder 2, dadurch *gekennzeichnet*, dass das Kohlenhydratderivat, das eine Dienolgruppe enthält, ausgewählt ist aus Ascorbinsäure, Reduktion, Reduktionsäure oder Hydroxytetronsäure.

4. Verfahren nach einem der Ansprüche 1 bis 3, dadurch *gekennzeichnet*, dass man unter Verwendung einer 1 bis 5 Gew./Vol.-%-igen Hämoglobinlösung die Oxidation in Anwesenheit von 0,5 bis 5 Gew./Vol.-%-iger Ascorbinsäure mit einer 30 Gew.-%-igen wässrigen Wasserstoffperoxidlösung durchführt.

5. Verfahren nach einem der Ansprüche 1 bis 4, dadurch *gekennzeichnet*, dass man das Hämoglobin in einer Fraktioniermembran mit einem Molekulargewichtsbereich von 5000 bis 50 000 gegen Wasser oder eine physiologische Natriumchloridlösung dialysiert.

6. Verfahren nach einem der Ansprüche 1 bis 5, dadurch *gekennzeichnet*, dass man die entfärbte Hämoglobinlösung mit Hilfe eines Ultrafilters aufkonzentriert.

7. Verfahren nach Anspruch 1 zur Herstellung einer schwach gelben oder farblosen Blutzusammensetzung, dadurch *gekennzeichnet*, dass man Blutplasma oder Blutplasmakonzentrat zur entfärbten Hämoglobinlösung, vorzugsweise in einem dem natürlichen Blut entsprechenden Verhältnis, zugibt.

8. Verfahren nach den Ansprüchen 2, 5, 6 und 7, dadurch *gekennzeichnet*, dass man die entfärbte Lösung unter Erhalt eines schwach gelben oder farblosen Pulvers gefriertrocknet.

9. Verfahren zur Herstellung einer schwach gelben bis farblosen, klaren, wässrigen Lösung, die Hämoglobin enthält, dadurch *gekennzeichnet*, dass man die dunkelrote wässrige Lösung, die 2 bis 10 Gew.-% Hämoglobin enthält, bei einem pH-Wert von 1 bis 3 in Anwesenheit von Ascorbinsäure einer Oxidation durch Wasserstoffperoxid unterwirft und gewünschtenfalls die so erhaltene Lösung aufkonzentriert und den pH-Wert auf 7 bis 7,5 einstellt.

10. Verfahren nach Anspruch 9, dadurch *gekennzeichnet*, dass die entfärbte Lösung unter Erhalt eines schwach gelben oder farblosen Pulvers gefriergetrocknet wird.

11. Verfahren zur Herstellung einer Nahrungsmittelzusammensetzung für Mensch und Tier, dadurch *gekennzeichnet*, dass man die nach einem der Ansprüche 1 bis 10 erhaltenen Produkte in menschliche oder tierische Nahrung einmischt.

**Revendications**

1. Procédé de préparation de produits décolorés contenant des éléments figurés du sang, comme le sang en poudre entier, la poudre d'hémoglobine et les concentrés de sang, qui servent à la préparation d'additifs alimentaires à partir de solutions, suspensions ou émulsions contenant ces éléments figurés du sang, par addition d'anticoagulants, ouverture des éléments figurés du sang par des procédés en eux-même connus, et si on le désire concentration et/ou lyophilisation des compositions ainsi obtenues, caractérisé en ce qu'on ajuste la valeur du pH du mélange contenant les éléments figurés ouverts et l'hémoglobine à un pH de 1 à 3, on traite le mélange avec de l'eau oxygénée en présence d'un dérivé d'hydrate de carbone contenant un groupe diénol, si on le désire on réalise une dyalise de la solution ainsi obtenue pour éliminer les sous-produits, on concentre la solution jusqu'à obtention d'une teneur en substance sèche de 10 à 40 % p/v avant ou après ajustement de la valeur du pH à 7 à 7,5, et, si on le désire, on lyophilise le produit.

2. Procédé selon la revendication 1, caractérisé en ce qu'après ouverture des éléments figurés du sang, on dilue la solution obtenue avec de l'eau jusqu'à obtention d'une concentration de 2 à 10 % p/v d'hémoglobine.

3. Procédé selon l'une quelconque des revendications 1 à 2, caractérisé en ce qu'on choisit le dérivé hydrate de carbone contenant un groupe diénol parmi l'acide ascorbique, la réductone, l'acide réductinique ou l'acide hydroxytétronique.

4. Procédé selon les revendications 1 à 3, caractérisé en ce qu'on réalise l'oxydation en présence de 0,5 à 5 % p/v d'acide ascorbique avec 30 % en poids de solution aqueuse d'eau oxygénée, en utilisant une solution d'hémoglobine à 1 à 5 % p/v.

5. Procédé selon l'une quelconque des revendications 1 à 4, caractérisé en ce qu'on dialyse l'hémoglobine avec une membrane ayant un intervalle de coupure de 5000 à 50 000 (poids moléculaire) contre l'eau ou une solution physiologique de chlorure de sodium.

6. Procédé selon l'une quelconque des revendications 1 à 5, caractérisé en ce qu'on concentre la solution d'hémoglobine décolorée au moyen d'un ultrafiltre.

7. Procédé selon la revendication 1 pour préparer une composition sanguine jaune pâle ou incolore, caractérisé en ce qu'on ajoute du plasma sanguin ou un concentré de plasma sanguin à la solution d'hémoglobine décolorée, de préférence dans un rapport correspondant à celui du sang naturel.

8. Procédé selon les revendications 2, 5, 6 et 7, caractérisé en ce qu'on lyophilise la solution décolorée pour obtenir une poudre jaune pâle ou incolore.

9. Procédé de préparation d'une solution aqueuse claire jaune pâle à incolore contenant de l'hémoglobine, caractérisé en ce qu'on soumet des solutions aqueuses rouge foncé contenant de 2 à 10 % en poids d'hémoglobine à un pH de 1 à 3 en présence d'acide ascorbique à une oxydation avec de l'eau oxygénée, et si on le désire en ce qu'on concentre la solution ainsi obtenue et en ce qu'on ajuste la valeur du pH à 7 à 7,5.

10. Procédé selon la revendication 9, caractérisé en ce qu'on lyophilise la solution décolorée pour obtenir une poudre jaune pâle ou incolore.

11. Procédé de préparation de compositions alimentaires pour l'utilisation chez l'homme et l'animal, caractérisé en ce qu'on mélange les produits obtenus selon l'une quelconque des revendications 1 à 8 à un aliment pour l'homme ou l'animal.